# EUROPEAN PATENT SPECIFICATION

(11) **EP 0 442 550 B1**
(45) Date of publication and mention of the grant of the patent: **04.01.1995**
(21) Application number: 91200123.7
(22) Date of filing: 22.01.1991
(51) Int. Cl.: C09K 3/10, F16J 15/14

(54) **Sheet sealing material**
Dichtungsmasse für plattenförmiges Material
Composition d'étanchéité pour matériaux en feuille

(30) Priority: 15.02.1990 GB 9003416
(43) Date of publication of application: 21.08.1991
(73) Proprietor: TBA Industrial Products Limited, Manchester M3 2NL (GB)
(72) Inventor: Hoyes, John Robert, Littleborough, Lancashire OL15 9NW (GB); Woolfenden, Stephen, Bamford, Rochdale OL11 5HU (GB)
(74) Representative: Hadfield, Robert Franklin

(56) References cited:
- DE-A- 3 142 535
- WORLD PATENT INDEX, LATEST, accession no. 90-128541 [17], Derwent Publications Ltd, London, GB; & JP-A-2 077 484
- FILE SUPPLIER JAPS, Patent Office of Japan, Tokyo, JP; & JP-A-1 198 674
- FILE SUPPLIER JAPS, Patent Office of Japan, Tokyo, JP; & JP-A-20 22 376

## Description

This invention relates to sheet sealing material, and more particularly to sheet sealing material from which gaskets can be cut for use in sealing against so-called "aggressive chemicals."

Such gaskets are for example used in the pulp and paper, petrochemical, plating and food processing industries, and it is well known to make them of a sintered polytetrafluoroethylene (PTFE) resin, that is to say of a resin whose predominant repeating unit is -CF₂.CF₂-. To reduce to acceptable limits the creep relaxation or cold flow which such resins suffer under flange pressure, it has long been the practice to load the PTFE with an inorganic filler (other than the asbestos previously employed in gasketing) which is capable not only of reinforcing the material to provide a good seal but also of withstanding attack from whatever liquid is to be confined. Thus, barium sulphate may be used as inert filler if strongly alkaline liquids are involved and quartz (crystalline silica) as inert filler against strong acids. With hydrofluoric acid, graphite is employed.

Gaskets of the kind just described, recommended for use to 260° C, have been available for at least the past 10 years (see for example brochure GDAL-11/78-30M published 1978 by Garlock of Canada Ltd) and are still available (see for example GYLON: Non-asbestos gasketing, TP-Rev 6/86-20M, Garlock 1986). A typical product contains about 45% by weight of quartz, of particle size 75 µm and below, with most of it passing a 53 µm aperture sieve.

A suitable method of making sheet from which the gaskets can be cut, the so-called HS-10 process of du Pont, is described in an article published by the Valve Manufacturers Assocation of America and entitled "PTFE-based gasketing materials", presented by David G Lingard of Garlock Inc at the Asbestos Substitute Gasket and Packing Materials Seminar held in Houston, Texas in August 1986. In order to ensure that the materials have good sealing properties, the inert filler employed is very fine - eg 75 µm and below as already indicated, or in general not greater than 106 µm (= BS sieve no. 150), so that the surfaces of the gasket are closely conformable to the surfaces to be sealed. However, it is very difficult to incorporate such fine filler in a PTFE resin so that it is uniformly dispersed therein, and the resulting lack of homogeneity is often reflected in a sealing capability which varies considerably over the area of the sintered sheet product.

It has occurred to us that, simply because the filler in the surfaces of the gasket material is required to be very fine, it does not follow that very fine filler has to be used throughout the thickness of the material; and that if relatively coarse filler is made use of in the body as distinct from the surfaces, then to that extent the difficulties of incorporating filler are reduced.

According to the invention, there is provided sheet sealing material from which gaskets can be cut for sealing against an aggressive chemical, the material having surfaces of a sintered PTFE resin in which is dispersed an inert inorganic filler substantially all of which is of particle size less than 106 µm, characterised in that there is interposed between said surfaces a core of sintered PTFE resin in which relatively coarse inert inorganic filler is dispersed. By "relatively coarse" we mean that at least 17.5% by weight of core filler should be of particle size greater than 106 µm. To achieve a balance of desirable properties in the sintered sheet product and gaskets made from it, it is preferred that 20-35% by weight of the core filler should be of particle size above 106 µm. The remainder is of particle size below 106 µm. Preferably at least 7.5% by weight of the core filler, and particularly 10-25% by weight, is of particle size greater than 150 µm. Preferably the core filler has no substantial content of particles of size greater than 250 µm.

The invention is further illustrated by the following Example.

### Example

### Preparation of Surface Layers

Paraffin was blended with a tape-making grade of PTFE powder, the quantity of paraffin being such as to be absorbed completely by the polymer. Fine-ground quartz (about 98% by weight passing a sieve of aperture 106 µm, and about 85% passing 45 µm) was then blended with the paraffin-polymer mix.

The mix was fibrillated by passing it between calender bowls and the resulting sheet was cross-fibrillated by passing multiple thicknesses, at right-angles to the previous passage, again between the calender bowls. This cross-fibrillation was repeated several times to build up the green strength and uniformity of the sheet. At the conclusion of this stage the sheet thickness was 0.5 mm, with biaxial orientation of the PTFE.

### Preparation of Core

A core was prepared by following generally the procedure just described, with the difference that the quartz employed was relatively coarse: about 26% of it by weight was retained by (ie about 74% passed) a sieve of aperture 106 µm, while about 12.5% by weight was retained on a 150 µm sieve, about 7.5% on a 200 µm sieve and <1% on a 250 µm.

### Preparation of Laminate Sheet

The core was placed between two surface layers, and the assembly was formed into a laminate by calendering. The paraffin was then removed completely from the sheet by heating, and the material was then sintered by heating at 350-400°C. The properties of the product were as follows:

| | |
|---|---|
| Thickness (mm) | 1.6 |
| Specific gravity | 2.1 |
| Compressibility (%) | 7.3 |
| (ASTM F36) | |
| Recovery (%) | 44 |
| (ASTM F36) | |
| Tensile strength | 11.5 (direction A) |
| (ASTM F152) | 10.2 (at 90° to A) |
| Stress relaxation (MPa) | 17.2 |
| (BS Condition/40 MPa/250°C) | |
| Gas leakage (ml/min) | 0.77 |
| (DIN) | |
| Liquid leakage (ml/hour) | 0.42 |
| (ASTM F37) | |
| * Acid resistance | +0.1 |

| | |
|---|---|
| * % change in thickness after immersion in 98% H₂SO₄ for 16 hours at room temperature. | |

Following generally the procedure of the above Example, sintered sheet sealing material from which alkali-resistant gaskets can be cut is made by using, instead of quartz, barium sulphate of the particle size characteristics set out above for quartz.

## Claims

1. Sheet sealing material from which gaskets can be cut for sealing against an aggressive chemical, the material having surfaces of a sintered PTFE resin in which is dispersed an inert inorganic filler substantially all of which is of particle size less than 106 µm, characterised in that there is interposed between said surfaces a core of sintered PTFE resin in which is dispersed inert inorganic filler at least 17.5% of whose weight is formed by particles of size greater than 106 µm.

2. Sheet sealing material according to claim 1, in which 20-35% by weight of the core filler is of particle size greater than 106 µm.

3. Sheet sealing material according to claim 1 or 2, in which at least 7.5% by weight of the core filler is of particle size greater than 150 µm.

4. Sheet sealing material according to claim 1, 2 or 3, in which both surface filler and core filler are of quartz.

5. A gasket cut from the sheet sealing material of any preceding claim.

## Patentansprüche

1. Blattförmiges Dichtungsmaterial, aus dem Dichtungen zum Dichten gegen eine aggressive Chemikalie geschnitten werden können, welches Material Oberflächen aus einem gesinterten PTFE-Harz aufweist, in welchem ein inerter anorganischer Füllstoff dispergiert ist, dessen Gesamtheit im wesentlichen von einer Teilchengröße von weniger als 106 µm ist, dadurch gekennzeichnet, daß zwischen den Oberflächen ein Kern gesinterten PTFE-Harzes angeordnet ist, in welchem ein inerter anorganischer Füllstoff dispergiert ist, von dessen Gewicht zumindest 17,5 % von Teilchen einer Größe von über 106 µm gebildet werden.

2. Blattförmiges Dichtungsmaterial nach Anspruch 1, in welchem 20-35 Gew.-% des Kernfüllstoffes von einer Teilchengröße von über 106 µm sind.

3. Blattförmiges Dichtungsmaterial nach Anspruch 1 oder 2, in welchem zumindest 7,5 Gew.-% des Kernfüllstoffes von einer Teilchengröße von über 150 µm sind.

4. Blattförmiges Dichtungsmaterial nach Anspruch 1, 2 oder 3, in welchem sowohl der Oberflächenfüllstoff als auch der Kernfüllstoff aus Quarz sind.

5. Dichtung, geschnitten aus dem blattförmigen Dichtungsmaterial eines vorhergehenden Anspruchs.

## Revendications

1. Matériau d'étanchéité en feuilles, dans lequel on peut découper des garnitures d'étanchéité contre un produit chimique agressif, ledit matériau ayant des surfaces formées d'une résine frittée de PTFE dans laquelle est dispersée une charge minérale inerte dont presque toutes les particules ont une dimension de moins de 106 µm, caractérisé en ce qu'une partie centrale de résine frittée de PTFE est interposée entre les surfaces, dans laquelle est dispersée une charge minérale inerte dont au moins 17,5 % en poids sont formés de particules ayant une dimension de plus de 106 µm.

2. Matériau d'étanchéité en feuilles selon la revendication 1, dans lequel 20 à 35 % en poids de la charge centrale ont une dimension de particules de plus de 106 µm.

3. Matériau d'étanchéité en feuilles selon la revendication 1 ou 2, dans lequel au moins 7,5 % en poids de la charge centrale ont une dimension de particules de plus de 150 µm.

4. Matériau d'étanchéité en feuilles selon la revendication 1, 2 ou 3, dans lequel la charge superficielle et la charge centrale sont formées de quartz.

5. Garniture d'étanchéité découpée dans le matériau d'étanchéité en feuilles selon l'une quelconque des revendications précédentes.
